# EUROPÄISCHE PATENTSCHRIFT

(11) **EP 2 174 040 B1**
(45) Veröffentlichungstag und Bekanntmachung des Hinweises auf die Patenterteilung: **17.08.2011**
(21) Anmeldenummer: 08774137.7
(22) Anmeldetag: 19.06.2008
(51) Int. Cl.: F16H 61/16, F16H 59/66

(54) **STEUERUNGSVERFAHREN EINES AUTOMATISIERTEN SCHALTGETRIEBES IN EINEM KRAFTFAHRZEUG MIT ALLRADANTRIEB**
A METHOD FOR CONTROLLING AN AUTOMATED VARIABLE-SPEED TRANSMISSION IN A MOTOR VEHICLE WITH ALL-WHEEL DRIVE
UN PROCÉDÉ DE COMMANDE DE BOÎTE DE VITESSES AUTOMATISÉE DE VÉHICULE AUTOMOBILE À ENTRAÎNEMENT TOUTES ROUES MOTRICES

(30) Priorität: 27.07.2007 DE 102007035296
(43) Veröffentlichungstag der Anmeldung: 14.04.2010
(73) Patentinhaber: ZF Friedrichshafen AG, 88038 Friedrichshafen (DE)
(72) Erfinder: MAIR, Roland, 88069 Tettnang (DE)
(86) Internationale Anmeldenummer: PCT/EP2008/057752
(87) Internationale Veröffentlichungsnummer: WO 2009/015939

(56) Entgegenhaltungen:
- EP-A- 1 580 465
- DE-A1- 3 334 721
- DE-A1- 3 925 138
- DE-A1- 10 318 498
- DE-A1-102005 050 479

## Beschreibung

Die Erfindung betrifft ein Steuerungsverfahren eines automatisierten Schaltgetriebes in einem Antriebsstrang eines Kraftfahrzeuges mit einem Allradantrieb gemäß dem Oberbegriff des Patentanspruchs 1.

Bei Kraftfahrzeugen, deren Antriebsstrang ein automatisiertes Schaltgetriebe und eine automatisierte Anfahrkupplung aufweist, werden automatische Schaltvorgänge zum Anfahren und bei einem Gangwechsel mittels einer elektronischen Steuerung ausgeführt, die verschiedene betriebsrelevante Sensordaten, wie beispielsweise Motordrehzahl, Getriebeeingangsdrehzahl, Fahrpedalstellung, Fahrgeschwindigkeit, Schaltabsicht unter anderem erfasst und nach einer Auswertung ein Aus- und Einkuppeln der Kupplung sowie ein Wechseln einer Getriebeübersetzung über entsprechend ansteuerbare Aktuatorsysteme auslöst.

Automatisierte Schaltgetriebe haben sich bereits als sehr effektive Zahnradwechselgetriebe in Fahrzeugen bewährt. Im Gegensatz zu unter Last schaltenden Automatgetrieben unterliegen sie allerdings, abgesehen von Doppelkupplungssystemen, bei denen über zwei Kupplungen überschneidend im sequenziellen Wechsel die Gänge geschaltet werden, bei Schaltvorgängen einer Zugkraftunterbrechung, da während des Schaltvorganges stets die Anfahrkupplung geöffnet wird.

Derart ausgestattete Kraftfahrzeuge können sich bei schwierigen Bodenverhältnissen, beispielsweise in schwerem Gelände oder allgemein auf rutschigem Untergrund, problematisch verhalten, wenn während der Fahrt plötzlich ein automatischer Gangwechsel ausgelöst wird. Durch eine Schaltung kann es, etwa beim Fahren in Sand oder auf vereister Fahrbahn mit schlupfenden Rädern, zum Liegenbleiben oder Steckenbleiben des Fahrzeugs kommen, wenn die Zugkraft unterbrochen wird. Sofern die eingeleitete automatische Schaltung überhaupt durchgeführt und die Kupplung hinterher wieder geschlossen werden kann, so kommt es möglicherweise zu einer Vergrößerung des Schlupfes mit der Folge eines massiven Durchdrehens der angetriebenen Räder. Dies kann die Fahrt des Fahrzeuges unter Umständen ungewollt beenden.

Um dies zu verhindern sind bereits Getriebesteuerungen bekannt, bei denen keine automatisch ausgelösten Schaltungen ausgeführt werden, wenn erkannt wurde, dass an zumindest einem Fahrzeugrad ein Radschlupf vorliegt. Dies kann etwa mit Hilfe einer Signalisierung durch ein Bremssystem oder über den Antriebsmotor erfolgen, indem eine Aktivierung eines Fahrzeugstabilisierungssystems, beispielsweise einer Antriebsschlupfregelung (ASR), dem Getriebesteuerungsgerät gemeldet wird, und/oder indem die Radgeschwindigkeiten bzw. Raddrehzahlen der angetriebenen und nicht angetriebenen Räder miteinander verglichen werden.

Weiterhin sind Kraftfahrzeuge mit permanentem oder zuschaltbarem Allradantrieb bekannt. Der Allradantrieb wirkt sich durch eine verbesserte Traktion, insbesondere in schwerem Gelände oder auf glatter Fahrbahn, vorteilhaft aus. Bei allradangetriebenen Fahrzeugen kann die Radschlupferkennung als Kriterium zur Unterdrückung von automatischen Schaltvorgängen jedoch unter Umständen versagen. Zwar sind grundsätzlich sowohl bei permanentem wie bei zuschaltbarem bzw. mit variabler Antriebsmomentverteilung betreibbarem Allradantrieb Raddrehzahlvergleiche zur Ermittlung von Radschlupf möglich. Häufig werden jedoch gerade bei schwierigen Untergrundverhältnissen zusätzlich zum Allradantrieb vorhandene Differenzialsperren aktiviert. Bei Fahrzeugen mit Allradantrieb in Verbindung mit aktiven Differenzialsperren an allen angetriebenen Achsen weisen in der Regel alle Räder zwangsläufig die gleiche Geschwindigkeit oder Drehzahl auf und es kann nicht mehr mit den herkömmlichen Raddrehzahlvergleichen ermittelt werden, ob ein Radschlupf vorliegt oder nicht. Trotzdem besteht weiterhin die Anforderung, bei Schlupf an den Fahrzeugrädern keine automatischen Schaltungen auszuführen. Bisher sind keine Steuerungsverfahren bekannt, die diesem Problem zufriedenstellend begegnen.

Grundsätzlich könnte ein Bedienelement vorgesehen sein, das dem Fahrer ein Ausschalten eines automatischen Schaltmodus ermöglicht. Dies würde jedoch voraussetzen, dass der Fahrer vorausschauend die Radschlupfgefahr erkennt und die Schaltautomatik abschaltet, bevor die Steuerung bei möglicherweise beginnend durchdrehenden Rädern einen Schaltvorgang auslösen kann. Zudem besteht die Gefahr, dass der Fahrer in einer gegebenenfalls schwierigen Fahrsituation mit der Bedienung eines zusätzlichen Schalters überfordert oder zumindest abgelenkt wäre.

Denkbar wäre auch eine das Fahrzeug und seine Umgebung bezüglich einer Relativposition bzw. einer Relativbewegung analysierende Sensorik, die feststellt, ob sich das Fahrzeug tatsächlich bei sich drehenden angetriebenen Rädern entsprechend der Radgeschwindigkeit fortbewegt. Dies würde jedoch einen relativ hohen Kosten- und Implementierungsaufwand erfordern.

Die DE 10 2005 050 479 A1 betrifft ein Verfahren zur Steuerung und/oder Regelung von Schaltungen eines automatischen Getriebes eines Kraftfahrzeuges, vorzugsweise eines Doppelkupplungsgetriebes, wobei in einem Sonderfahrzustand des Kraftfahrzeuges, insbesondere in einem Fahrzustand während des Einsatzes einer Antriebsschlupfregelung (ASR) oder einer elektronischen Differenzialsperre (EDS), zur Verringerung des zur Verfügung stehenden Radmomentes von einem Quellgang in einen Zielgang hochgeschaltet wird. Die Schaltungen sind dadurch optimiert, dass vor der Hochschaltung in den Zielgang zunächst die in dem Zielgang dann anliegende voraussichtliche Motordrehzahl vorab berechnet wird, dass danach überprüft wird, ob die berechnete Motordrehzahl über oder unter der Rückschaltschwelle zum Quellgang liegt, und dass nur dann, wenn die berechnete Motordrehzahl über der Rückschaltschwelle zum Quellgang liegt, die Hochschaltung in den Zielgang realisiert wird.

Die EP 1 580 465 A2 offenbart ein Verfahren zur Steuerung von automatischen Gangschaltungen eines Kraftfahrzeuggetriebes, durch welches unerwünschte Schaltungen verhindert oder zumindest reduziert werden können, solange durch eine Traktionsregelung erkannt wird, dass zumindest ein angetriebenes Rad durchdreht.

Gemäß der DE 10318 498 A1, die den Oberbegriff des Anspruchs 1 offenbart, werden von einer Steuerungseinrichtung Hochschaltungen ausgelöst, wenn eine Drehzahl einer Antriebsmaschine größer als ein Drehzahl-Schwellwert ist, wobei eine Hochschaltung nur dann ausgelöst wird, wenn ein einen Schlupf an angetriebenen Fahrzeugrädern kennzeichnender Schlupfwert kleiner als ein Schlupf-Grenzwert ist.

Vor diesem Hintergrund liegt der Erfindung die Aufgabe zugrunde, ein Verfahren anzugeben, das bei einem allradangetriebenen Fahrzeug mit einem automatisierten Schaltgetriebe bei schwierigen Untergrundverhältnissen mit möglichst einfachen Mitteln zuverlässig unerwünschte Schaltvorgänge verhindert.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem Fahrzeug mit Allradantrieb, bei dem wenigstens an einer angetriebenen Achse eine Differenzialsperre zugeschaltet ist, von einer anspruchsvollen Fahrsituation mit Radschlupfpotenzial in schwerem Gelände oder auf rutschigem Untergrund ausgegangen werden kann, in der keine automatischen Schaltungen erfolgen sollten.

Demnach geht die Erfindung aus von einem Steuerungsverfahren eines automatisierten Schaltgetriebes in einem Antriebsstrang eines Kraftfahrzeuges mit einem Allradantrieb, bei dem im Fahrbetrieb bei schwierigen Untergrundverhältnissen Maßnahmen zur Unterdrückung automatischer Schaltvorgänge vorgesehen sind. Zur Lösung der gestellten Aufgabe sieht die Erfindung vor, dass aktuell aktive traktionsrelevante Mittel in einer Plausibilitätsprüfung unter Berücksichtigung einer Erkennbarkeit von Radschlupf bewertet werden und die Maßnahmen zur Unterdrückung automatischer Schaltvorgänge in Abhängigkeit von dieser Bewertung erfolgen.

Das im Folgenden näher beschriebene erfindungsgemäße Verfahren ermöglicht vorteilhaft bei einem Fahrzeug mit Allradantrieb in Verbindung mit aktivierten Differenzialsperren die Steuerungsfunktion "Unterdrückung automatischer Schaltungen bei Schlupf und/oder Schlupfpotenzial". Dadurch werden möglicherweise nachteilige Zugkraftunterbrechungen in derartigen Fahrsituationen vermieden.

Unter einer automatischen Schaltung werden automatisch von einer Steuerung ausgelöste Schaltvorgänge zur Änderung einer Getriebeübersetzung bei einem automatisierten Schaltgetriebe verstanden. Üblicherweise stehen einem Steuergerät im Fahrzeug, insbesondere der Getriebesteuerung, Informationen, die die Aktivierung von Differenzialsperren sowie die Aktivierung des Allradantriebes, beispielsweise über eine Schaltstellung eines Verteilergetriebes, anzeigen, in Form von Sensor-Signalen oder Schalterstellungen zur Verfügung. Gemäß der Erfingung wird anhand der angetriebenen Räder und aktivierten Sperren ermittelt, ob und wann zwischen welchen Fahrzeugrädern prinzipbedingt noch Schlupf auftritt. Die Radgeschwindigkeiten dieser Räder werden zur Ermittlung von Schlupf durch einen Vergleich zielgerichtet herangezogen.

Sind alle Räder über die Sperren auf gleiche Raddrehzahl gezwungen, so kann ein Radschlupf nicht mehr direkt erkannt werden. Allerdings wird in der Praxis ein Fahrzeug nur unter schweren Einsatzbedingungen mit allen Sperren aktiv betrieben werden, so dass bei aktiven Sperren davon ausgegangen werden kann, dass potenziell Schlupf bzw. eine anspruchsvolle Fahrsituation vorliegt, in der automatische Schaltungen nicht erfolgen sollen.

Dementsprechend kann vorteilhaft vorgesehen sein, dass automatische Schaltungen unterdrückt werden, wenn über den Allradantrieb alle Achsen des Fahrzeuges angetrieben werden und an allen Achsen Differenzialsperren aktiviert sind. Dadurch wird mit einfachen und kostengünstigen Mitteln erreicht, dass bei allradangetriebenen Fahrzeugen mit gesperrten Differenzialen unter schwierigen Geländebedingungen keine ungünstigen automatischen Schaltungen erfolgen.

Da bereits eine einzelne aktive Sperre an einer der Antriebsachsen schon auf eine schwierige Fahrsituation hindeutet, kann vorteilhaft vorgesehen sein, dass, unabhängig von tatsächlich auftretendem Radschlupf, automatische Schaltungen auch schon dann unterdrückt werden, wenn über den Allradantrieb alle Achsen des Fahrzeuges angetrieben werden und an zumindest einer Achse eine Differenzialsperre aktiviert ist.

Als eine Reaktion auf einen erkannten Radschlupf oder auf die Meldung "Differenzialsperre bzw. Differenzialsperren aktiv" kann eine Maßnahme zur Unterdrückung automatischer Schaltvorgänge vorgesehen sein, bei der eine Schaltautomatik einer Getriebesteuerung automatisch deaktiviert und nur auf eine gesonderte Anforderung durch den Fahrer reaktiviert wird, beispielsweise über die Betätigung eines geeigneten Bedienelements. Die automatische Deaktivierung der Schaltautomatik bei erkanntem oder aufgrund aktivierter Differenzialsperren zumindest potenziell erwartetem Radschlupf ist besonders komfortabel und sicher, da sich der Fahrer in solchen Situationen (Gelände, rutschiger Untergrund usw.) voll auf die Beherrschung des Fahrzeuges konzentrieren kann und nicht durch die Bedienung zusätzlicher Schalter abgelenkt wird.

Grundsätzlich ist es jedoch auch möglich, dass eine Einrichtung zur manuellen Deaktivierung einer Schaltautomatik auf Fahreranforderung, beispielsweise ein Tastschalter am Getriebewählhebel, vorgesehen ist, und dem Fahrer als eine Reaktion auf erkannten Radschlupf oder auf das Signal "Differenzialsperre bzw. Differenzialsperren aktiv" eine Deaktivierungsempfehlung übermittelt wird, beispielsweise in Form eines optischen, akustischen und/oder haptischen Signals.

Möglich ist auch, dass die Schaltautomatik nur temporär deaktiviert wird und eine Reaktivierung beim Wegfall oder zumindest bei einer Änderung der der Deaktivierung zu Grunde liegenden Bewertungsbedingungen automatisch erfolgt. Die Schaltautomatik setzt in diesem Fall also ihre Tätigkeit aus, solange der entsprechende Zustand vorliegt und setzt wieder ein, sobald dieser Zustand nicht mehr gegeben ist, also kein Radschlupf mehr vorhanden ist bzw. die geschalteten Differenzialsperren wieder freigegeben sind.

Schließlich kann vorgesehen sein, dass bei deaktivierter Schaltautomatik manuelle Schaltungen ausgeführt werden können, also Schaltungen auf Fahreranforderung durch Betätigen eines Getriebewählhebels oder einer diesbezüglichen Schaltwippe. Dadurch wird dem Fahrer vorteilhaft die Möglichkeit gegeben, entsprechend seiner Wahrnehmung flexibel zu reagieren und zu geeigneten Zeitpunkten die aktuell geschaltete Getriebeübersetzung unter Inkaufnahme einer Zugkraftunterbrechung zu ändern, wenn dies zur Beherrschung einer Situation sinnvoll erscheint.

## Patentansprüche

1. Steuerungsverfahren eines automatisierten Schaltgetriebes in einem Antriebsstrang eines Kraftfahrzeuges mit einem Allradantrieb, bei dem im Fahrbetrieb bei schwierigen Untergrundverhältnissen Maßnahmen zur Unterdrückung automatischer Schaltvorgänge vorgesehen sind, **dadurch gekennzeichnet, dass** aktuell aktive Differenzialsperren in einer Plausibilitätsprüfung unter Berücksichtigung einer Erkennbarkeit von Radschlupf bewertet werden und die Maßnahmen zur Unterdrückung automatischer Schaltvorgänge in Abhängigkeit von dieser Bewertung erfolgen, wobei anhand der angetriebenen Fahrzeugräder und der aktivierten Differenzialsperren ermittelt wird, zwischen welchen Fahrzeugrädern prinzipbedingt noch Schlupf auftritt und die Radgeschwindigkeiten dieser Fahrzeugräder zur Ermittlung von Schlupf durch einen Vergleich zielgerichtet herangezogen werden.

2. Verfahren nach Anspruch 1, **dadurch gekennzeichnet, dass** automatische Schaltungen unterdrückt werden, wenn über den Allradantrieb alle Achsen des Fahrzeuges angetrieben werden und an allen Achsen Differenzialsperren aktiviert sind.

3. Verfahren nach Anspruch 1, **dadurch gekennzeichnet, dass** automatische Schaltungen unterdrückt werden, wenn über den Allradantrieb alle Achsen des Fahrzeuges angetrieben werden und an zumindest einer Achse eine Differenzialsperre aktiviert ist.

4. Verfahren nach einem der Ansprüche 1 bis 3, **dadurch gekennzeichnet, dass** als eine Maßnahme zur Unterdrückung automatischer Schaltvorgänge eine Schaltautomatik einer Getriebesteuerung automatisch deaktiviert wird.

5. Verfahren nach einem der Ansprüche 1 bis 4, **dadurch gekennzeichnet, dass** bei deaktivierter Schaltautomatik manuell ausgelöste Schaltungen auf Fahreranforderung möglich sind.

6. Verfahren nach einem der Ansprüche 1 bis 5, **dadurch gekennzeichnet, dass** eine Reaktivierung der Schaltautomatik auf eine gesonderte Anforderung durch den Fahrer erfolgt.

7. Verfahren nach einem der Ansprüche 1 bis 5, **dadurch gekennzeichnet, dass** eine Reaktivierung der Schaltautomatik beim Wegfall oder zumindest bei einer Änderung der der Deaktivierung zu Grunde liegenden Bewertungsbedingungen automatisch erfolgt.

8. Verfahren nach einem der Ansprüche 1 bis 7, **dadurch gekennzeichnet, dass** eine Einrichtung zur manuellen Deaktivierung einer Schaltautomatik auf Fahreranforderung vorgesehen ist und dem Fahrer als eine Maßname zur Unterdrückung automatischer Schaltvorgänge eine Deaktivierungsempfehlung übermittelt wird.

9. Verfahren nach einem der Ansprüche 1 bis 8, **dadurch gekennzeichnet, dass** automatische Schaltungen unterdrückt werden, wenn an zumindest einem Rad ein Radschlupf erkannt wird.

## Claims

1. Method for controlling an automated shift gearbox in a drivetrain of a motor vehicle with all-wheel drive, in which method, during driving operation in difficult underlying surface conditions, measures for suppressing automatic shift processes are provided, **characterized in that** presently active differential locks are evaluated in a plausibility check taking into consideration a detectability of wheel slip, and the measures for suppressing automatic shift processes are implemented as a function of said evaluation, wherein on the basis of the driven vehicle wheels and the activated differential locks, it is determined which vehicle wheels slip is still occurring between in principle, and the wheel speeds of said vehicle wheels are targetedly taken into consideration for the determination of slip by means of a comparison.

2. Method according to Claim 1, **characterized in that** automatic shifts are suppressed if all the axles of the vehicle are driven by means of the all-wheel drive and differential locks are activated on all axles.

3. Method according to Claim 1, **characterized in that** automatic shifts are suppressed if all the axles of the vehicle are driven by means of the all-wheel drive and a differential lock is activated on at least one axle.

4. Method according to one of Claims 1 to 3, **characterized in that**, as a measure for suppressing automatic shift processes, a shift automation means of a transmission controller is automatically deactivated.

5. Method according to one of Claims 1 to 4, **characterized in that**, when the shift automation means is deactivated, manually triggered shifts upon driver demand are possible.

6. Method according to one of Claims 1 to 5, **characterized in that** a reactivation of the shift automation means takes place upon a separate demand by the driver.

7. Method according to one of Claims 1 to 5, **characterized in that** a reactivation of the shift automation means takes place in the event of the elimination, or at least in the event of a change, of the evaluation conditions on which the deactivation was based.

8. Method according to one of Claims 1 to 7, **characterized in that** a device for manually deactivating a shift automation means upon driver demand is provided and a deactivation recommendation is transmitted to the driver as a measure for suppressing automatic shift processes.

9. Method according to one of Claims 1 to 8, **characterized in that** automatic shifts are suppressed if wheel slip is detected at at least one wheel.

## Revendications

1. Procédé de commande d'une boîte de vitesse automatisée d'une chaîne cinématique d'un véhicule automobile, avec un entraînement toutes roues motrices, dans lequel, pendant le mode de conduite, dans le cas de conditions au sol difficiles, des mesures pour supprimer des opérations de changement de vitesse automatiques sont prévues, **caractérisé en ce que** des blocages actuellement actifs du différentiel sont évalués dans un examen de plausibilité en tenant compte d'une capacité de reconnaissance de patinage des roues, et les mesures pour supprimer des opérations de changement de vitesse automatiques ont lieu en fonction de cette évaluation, et à l'aide des roues motrices du véhicule et des blocages activés du différentiel, on détermine entre quelles roues du véhicule a encore lieu, en principe, un patinage, et les vitesses de roue de ces roues du véhicule sont utilisées de manière ciblée au moyen d'une comparaison pour déterminer le patinage.

2. Procédé selon la revendication 1, **caractérisé en ce que** des changements de vitesse automatiques sont supprimés lorsque tous les essieux du véhicule sont entraînés par le biais de l'entraînement toutes roues motrices et que des blocages du différentiel sont activés sur tous les essieux.

3. Procédé selon la revendication 1, **caractérisé en ce que** des changements de vitesse automatiques sont supprimés lorsque tous les essieux du véhicule sont entraînés par le biais de l'entraînement toutes roues motrices et qu'un blocage du différentiel est activé au niveau d'au moins un essieu.

4. Procédé selon l'une quelconque des revendications 1 à 3, **caractérisé en ce qu'**à titre de mesure pour supprimer des changements de vitesse automatiques, un système automatique de changement de vitesse d'une commande de boîte de vitesse est automatiquement désactivé.

5. Procédé selon l'une quelconque des revendications 1 à 4, **caractérisé en ce que** dans le cas de la désactivation du système automatique de changement de vitesse, des changements de vitesse déclenchés manuellement sont possibles sur commande du conducteur.

6. Procédé selon l'une quelconque des revendications 1 à 5, **caractérisé en ce qu'**une réactivation du système de changement de vitesse automatique a lieu sur commande séparée du conducteur.

7. Procédé selon l'une quelconque des revendications 1 à 5, **caractérisé en ce qu'**une réactivation du système de changement de vitesse automatique a lieu automatiquement en l'absence ou au moins en cas de changement des conditions d'évaluation à l'origine de la désactivation.

8. Procédé selon l'une quelconque des revendications 1 à 7, **caractérisé en ce qu'**un dispositif pour la désactivation manuelle d'un système de changement de vitesse automatique sur commande du conducteur est prévu, et une recommandation de désactivation est transmise au conducteur à titre de mesure pour supprimer des opérations de changement de vitesse automatiques.

9. Procédé selon l'une quelconque des revendications 1 à 8, **caractérisé en ce que** des changements de vitesse automatiques sont supprimés lorsqu'un patinage des roues est détecté au moins au niveau d'une roue.
